# EUROPEAN PATENT APPLICATION

(11) **EP 1 978 673 A1**
(43) Date of publication of application: **08.10.2008**
(21) Application number: 07710849.6
(22) Date of filing: 26.01.2007
(51) Int. Cl.: H04L 12/24

(54) **A METHOD OF IMPLEMENTING RESOURCE CONTROL ON ACCESS LAYER FOR VC IN L2VPN**

(30) Priority: 26.01.2006 CN 200610033417
(71) Applicant: Huawei Technologies Co., Ltd., Longgang District, Shenzhen Guangdong 518129 (CN)
(72) Inventor: SUN, Jianping, Guangdong 518129 (CN)
(74) Representative: Körber, Martin Hans
(86) International application number: PCT/CN2007/000299
(87) International publication number: WO 2007/087750

(57) **Abstract**

The present invention discloses a method and device for implementing resource control on an access layer for a VC in an L2VPN. In an MPLS network, during the establishment of a VC session, PEs interact with each other through an LDP mapping message from the local end and an LDP mapping message from the remote end for negotiating the bandwidth parameter. The PE device compares the analyzed bandwidth parameter of the opposite end with the bandwidth parameter configured for VC at the local end. If they are consistent, the bandwidth parameter is valid. If they are not consistent, the corresponding bandwidth parameters values are compared, and the bandwidth with the smaller value is valid. Alternatively a negotiation failure message is returned. The present invention can realize bandwidth control for each VC on the PE device on the access layer. It avoids the problems that different services cannot be provided in the case that multiple CEs access a PE via the same port in the PE or multiple VCs use the same out port in PE. The manageability is enhanced on account of implementing the traffic control on the service layer.

## Description

This application claims priority to Chinese Patent Application No. 200610033417.3 with the title "Method for Implementing Resource Control on an Access Layer for each VC in an L2VPN" filed Jan. 26, 2006, which is incorporated herein by reference.

### FIELD OF THE PRESENT INVENTION

The present invention relates to a Layer 2 Virtual Private Network (L2VPN), and more particular, to a method and device for implementing recourse control on an access layer for a VC in the L2VPN.

### BACKGROUND OF THE PRESENT INVENTION

An L2VPN transparently transmits layer 2 data of a user on a Packet Switch Network (PSN), such as a Multi-Protocol Label Switching (MPLS) network. From the view of the user, the PSN is a 2-layer switching network. The 2-layer connection may be established between different sites through the switching network.

In an L2VPN in the Martini mode, a Label Distribution Protocol (LDP) is used by signals that transmit Virtual Circuit (VC) information.

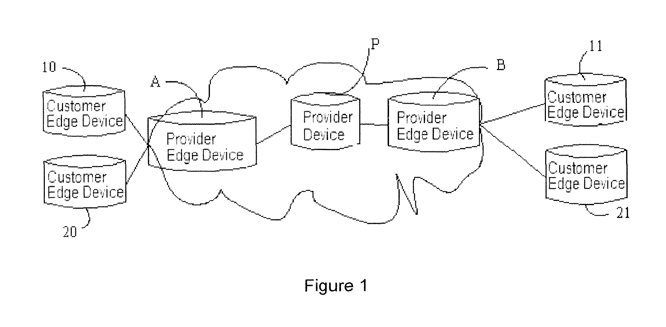

As shown in Figure 1, a Customer Edge Device (CE) 10 and a CE 11 locate in an L2VPN. A CE 20 and a CE 21 locate in another L2VPN. Taking the Martini mode for example, a Provider Edge Device (PE) A, a PE B, and a Provide Device (P) form an MPLS network. The P is a backbone router locating in the network of an operator. A public Label Switched Path (LSP) is already normally established. An LDP remote session is established between the PE A and the PE B.

Each connection between CEs is allocated with a VC Label by a PE. L2 VPN information carries the VC Label, and forwards the VC Label to the opposite PE of a remote session through the established LSP.

The VC Labels are exchanged through the LDP remote session. The labels adopt a Type-Length-Value (TLV) structure, and are carried in mapping messages. The existing technology adopts an LDP Forwarding Equivalence Class (FEC) to carry the VC information including the VC Label.

At present, with the existing technology, when implementing a Quality of Service (QoS) strategy for an L2VPN on a PE on the access layer, there are two modes. Mode 1 is that traffic speed is controlled on a PE port connected to a CE. Mode 2 is that traffic shaping for a traffic queue is implemented on a PE port connected to a P.

With the existing technology in mode 1, in the case that multiple CEs are connected to the same physical PE interface after a port conversion, it is complex or difficult to perform traffic speed limitation for different CEs on an incoming interface of the PE.

With the existing technology in mode 2, for the VC connection in multiple L2VPNs, in the case that there're fewer interfaces on the network side of the PE, for example, one or two interfaces, it is difficult to differentiate the VCs through different queues. Thus the requirements to guarantee the bandwidth for each VC cannot met.

In other words, if the above cases occur in the network, the existing technology cannot ensure the effective performance of the QoS strategy.

### SUMMARY OF THE PRESENT INVENTION

An embodiment of the present invention provides a method for implementing resource control on an access layer for a VC in an L2VPN. The QoS service is implemented directly on the VC without concerning the port on the access layer or at the network side.

Another embodiment of the present invention provides a device for implementing resource control on an access layer for a VC in an L2VPN. The resource control is performed for a VC on the access layer in the L2VPN. Thus the QoS service is implemented directly on the VC without concerning the port on the access layer or at the network side.

An embodiment of the present invention provides a method for implementing resource control on an access layer for a VC in an L2VPN, including:

during an establishment of a VC session, PEs negotiate a bandwidth parameter of the VC through an LDP message. Thus the PE obtains a valid bandwidth parameter; and

the PE controls traffic of the VC according to the valid bandwidth parameter.

Another embodiment of the present invention provides a device for implementing resource control on an access layer for a VC in an L2VPN, including:

a parameter negotiating module, adapted to negotiate a bandwidth parameter of a VC through an LDP message during an establishment of the VC session, and obtain a valid bandwidth parameter; and

a low-layer forwarding module, adapted to control traffic of the VC according to the valid bandwidth parameter obtained by the parameter negotiating module.

In certain embodiment of the present invention, during the establishment of a VC session, PEs negotiate a bandwidth parameter of the VC through interacting LDP messages. Therefore, the bandwidth control can be performed on the PEs for each VC on the access layer. The problem is solved that different services cannot be provided in the case that multiple CEs access the identical interface on the PE or multiple VCs use the same out port on the PE. Meanwhile, since the traffic control is realized on the service layer, the manageability can be improved when compared with the existing technology where the traffic control is implemented on the physical layer.

### BRIEF DESCRIPTION OF THE DRAWINGS

Figure 1 is a schematic diagram showing a structure of an L2VPN in the prior art;

Figure 2 is a schematic diagram showing a negotiation of the bandwidth parameter during an establishment of a VC session in an embodiment of the present invention;

Figure 3 is a schematic diagram showing the low-layer forwarding process after the VC statuses are all available in an embodiment of the present invention; and

Figure 4 is a diagram showing a PE diagram in an embodiment of the present invention.

### DETAILED DESCRIPTION OF THE PRESENT INVENTION

The following describes the present invention in combination with drawings and embodiments.

In an embodiment of the present invention, PEs in an MPLS network negotiate a bandwidth parameter when establishing a VC session to implement VC resource control on the access layer.

In an embodiment, an LDP label mapping message may be extended. The Label Mapping message carries a bandwidth parameter to be negotiated.

The LDP label mapping message may includes the contents listed Table 1 .

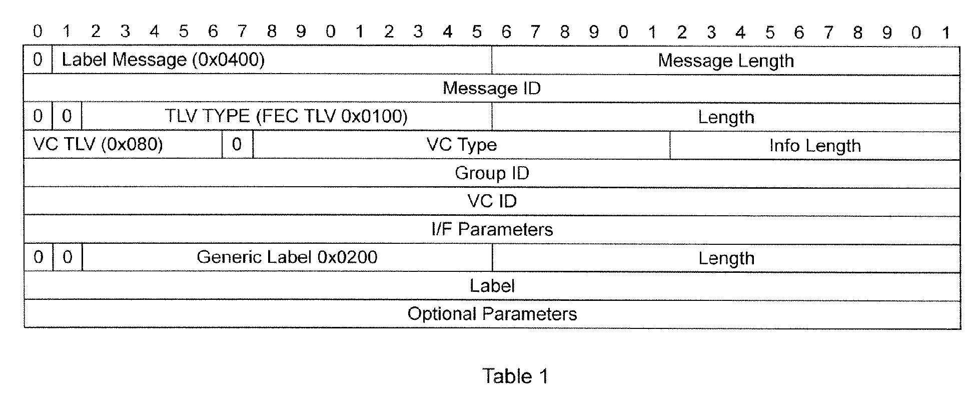

To easily describe the information in Table 1, the contents in Table 1are divided into ten layers. These layers are described separately.

As shown in Table 1, Lays I and II are LDP message headers, including label message, message length, and message identifier (ID). The label message is the LDP label mapping message (0x0400).

Layer III is the FEC TLV header, including TLV type and TLV length.

Layers IV, V, VI, and VII are Virtual Circuit FEC Elements, including VC TLV (0x080), VC type, info length, group ID, VC ID, and interface parameters.

Layers VIII, IX, and X are the label TLV headers, including generic label, length, label, and optional parameters.

There is a field of I/F parameters (Interface Parameters) in the VC FEC Elements of the LDP message. At present, the field is used to describe the value of the maximum transmission unit (MTU). The field can be extended to describe a bandwidth parameter configured at the local end for the VC. For example, a bandwidth parameter can be Committed data rate (cdr): 0x00000100, Committed burst size (cbs): 0x00000200, Max burst size (mbs): 0x00000300, and Peak rate (psr): 0x00000400.

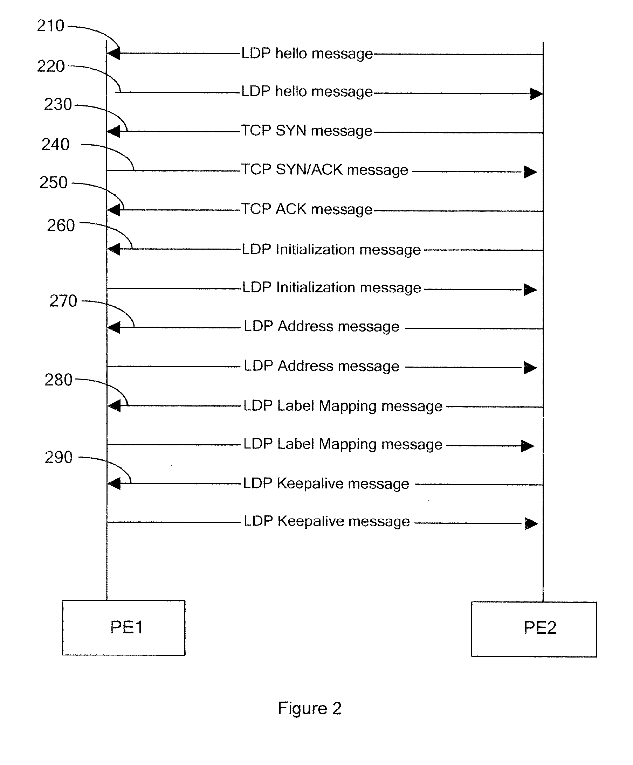

As shown in Figure 2, in an MPLS network, when establishing a VC session, PEs interact with each other through an LDP label mapping message from the local end and an LDP label mapping message from the opposite end. The PEs negotiate the bandwidth parameter of the two ends. A PE analyses a bandwidth parameter of the opposite end from the field of I/F Parameters in the LDP label mapping message from the opposite end. The PE compares the analyzed bandwidth parameter with a bandwidth parameter configured for the VC at the local end. If the two bandwidth parameters are consistent, the value of the bandwidth parameter is valid. If the two bandwidth parameters are not consistent, the values of the two bandwidth parameter are compared, and the bandwidth with the smaller value is valid, alternatively, if the two bandwidth parameters are not consistent, a negotiation failure message is returned. The bandwidth parameter can be one or more than one. When there is more than one bandwidth parameter, the PEs need to compare the corresponding parameter values respectively of both ends.

For example, PE 2 analyzes the bandwidth parameters transmitted by PE 1 are cdr: 0x00000100, cbs: 0x00000200, mbs: 0x00000300, psr: 0x00000400, and compares these parameters with the bandwidth parameters configured at the local end: cdr: 0x00000100, cbs: 0x00000200, mbs: 0x00000300, psr: 0x00000400. If they are equal, the negotiation succeeds. The values of the bandwidth parameters are valid.

If PE 2 analyzes the bandwidth parameters transmitted by PE 1 are cdr: 0x00000100, cbs: 0x00000200, mbs: 0x00000300 and psr: 0x00000400, and compares these parameters with the bandwidth parameters configured at the local end, such as cdr: 0x00000200, cbs: 0x00000100, mbs: 0x00000300 and psr: 0x00000500. PE 2 may selects the bandwidth parameter cdr: 0x00000100, cbs: 0x00000100, mbs: 0x00000300 and psr: 0x00000400. The negotiation succeeds and the bandwidth parameters take effect. Alternatively, PE 2 returns a negotiation failure message.

In an embodiment, the process of establishing a VC session includes:

1) Neighbor discovery: Neighbor discovery is implemented by transmitting an LDP hello message to each other;

Step 210, the PE 2 transmits an LDP hello message to the PE 1;

Step 220, the PE 1 transmits an LDP hello message to the PE 2.

2) Transmission Control Protocol (TCP) connection establishment: The establishment can be initiated by the party with a larger address;.

Step 230, the PE 2 transmits a TCP SYN message to the PE 1;

Step 240, the PE 1 transmits a TCP SYN/ACK message to PE 2;

Step 250, the PE 2 transmits a TCP ACK message to the PE 1.

3) Session initialization and parameter negotiation:

Step 260, the PE 2 and the PE 1 transmit an LDP initialization message to each other to negotiate a parameter;

Step 270, the PE 2 and the PE 1 negotiate the address parameter by transmitting an LDP Address message to each other.

4) Negotiation of bandwidth parameters:

Step 280, the PE 2 and the PE 1 interact with each other through an LDP label mapping message from the local end and an LDP label mapping message from the opposite end and negotiate the bandwidth parameters of the two ends.

5) Session establishment:

Step 290, After the PE 2 and the PE 1 both receive an LDP Keepalive message, the session is established. If any error message is received during the period, the session is closed, and the TCP connection is disconnected.

In an embodiment of the present invention, the PE processes the traffic control for each VC as follows:

Suppose that the bandwidth of the backbone link and P device are large enough. After the PE is configured with a VC and corresponding bandwidth parameters, it sends the above-mentioned LDP message to negotiate a bandwidth parameter. After the negotiation is completed, the bandwidth parameter obtained from the negotiation acts as a valid parameter for traffic control.

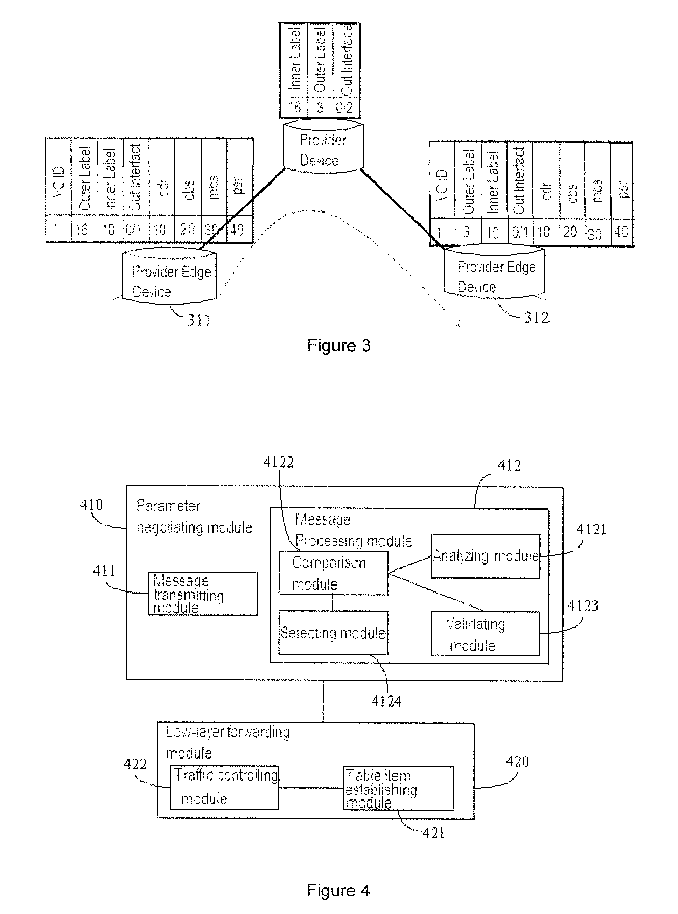

When the status of the VC is available, as shown in Figure 3, a table item is established on the low-layer forwarding module (not shown in the figure) in PEs 311 and 312. The table item can be combined by two table items.

A table item is in a VC table, as shown in Table 2, at least including VC index (VC ID), outer label, inner label, out interface, and traffic control index (CAR index).

**Table 2**

| VC ID | Outer Label | Inner Label | Out Interface | CAR Index |
|---|---|---|---|---|
| | | | | |

The other is a traffic control table, as shown in Table 3, at least including traffic control index (CAR index), Committed Data Rate (CDR), Committed Burst Size (CBS), Maximum Burst Size (MBS), and Peak Rate (PSR).

**Table 3**

| CAR Index | CDR | CBS | MBS | PSR |
|---|---|---|---|---|
| | | | | |

When performing traffic control, the low-layer forwarding module of the PE controls traffic of a VC by querying the VC table and the traffic control table orderly. The corresponding VC is determined according to information of the message. The corresponding CAR index is searched in the VC table. The traffic control table is searched according to the CAR index. The traffic control is performed according to the parameters in the traffic control table.

The traffic control table acts as a token bucket, continuously injects tokens (X p/s) to the bucket and forwards Y messages. Once the Y message meets the requirement of the VC table, Y tokens are subtracted from the corresponding bucket.

Referring to Figure 4, a device for implementing resource control on an access layer for a VC in an L2VPN includes a parameter negotiating module 410 and a low-layer forwarding module 420. The parameter negotiating module 410 is adapted to negotiate a bandwidth parameter of a VC through an LDP message during the establishment of the VC session. The parameter negotiating module 410 obtains the valid bandwidth parameter. The low-layer forwarding module 420 is adapted to control traffic of the VC according to the valid bandwidth parameter obtained by the parameter negotiating module 410.

In an embodiment, the parameter negotiating module 410 includes a message transmitting module 411 and a message processing module 412. The message transmitting module 411 is adapted to transmit an LDP label mapping message carrying a bandwidth parameter from a local end. The message processing module 412 is adapted to receive an LDP label mapping message from an opposite end, and perform the negotiation in accordance with a bandwidth parameter carried in an extended field of the LDP label mapping message with the bandwidth parameter configured at the local end.

In the VC FEC elements of the LDP label mapping message, there is a field of I/F parameters. At present, the field is mainly used to describe the interface MTU value. The field can be extended to describe the bandwidth configured for a VC at the local end. The bandwidth parameter includes: CDR, CBS, MBS, and PSR.

The message processing module 412 includes an analyzing module 4121, a comparing module 4122, a validating module 4123, and a selecting module 4124. The analyzing module 4121 is adapted to analyze the bandwidth parameter carried in the LDP label mapping message from the opposite end. The comparing module 4122 is adapted to compare the bandwidth parameter analyzed by the analyzing module with that configured for the VC at the local end. The validating module 4123 is adapted to validate the bandwidth parameter when the comparison result is consistent. The selecting module 4124 is adapted to select the bandwidth parameter with the smaller value when the comparison result is inconsistent.

The low-layer forwarding module 420 includes a table item establishing module 421 and a traffic controlling module 422. The table item establishing module 421 is adapted to establish a VC table and a traffic control table according to the bandwidth parameter negotiated by the parameter negotiating module when the VC status is available. The traffic controlling module 422 is adapted to control traffic of the VC by querying the VC table and the traffic control table.

In addition, in another embodiment, the message processing module 412 includes an analyzing module 4121, a comparing module 4122, a validating module 4123, and a failure message returning module (not shown in the figure). The analyzing module 4121 is adapted to analyze the bandwidth parameter carried in the LDP label mapping message from the opposite end. The comparing module 4122 is adapted to compare the bandwidth parameter analyzed by the analyzing module with that configured for the VC at the local end. The validating module 4123 is adapted to validate the bandwidth parameter when the comparison result is consistent. The failure message returning module is adapted to return a negotiation failure message when the comparison result is inconsistent.

In embodiments of the present invention, the device for implementing resource control on an access layer for a VC in an L2VPN can be deployed in the PE.

In embodiments of the present invention, during the establishment of a VC session, the bandwidth parameter of the VC is negotiated through the interaction of the LDP messages between PEs. Therefore, the bandwidth control can be implemented on the PEs for each VC on the access layer. The present invention solves the problem that difference services cannot be provided in the case that multiple CEs access a PE via the same port or multiple VCs use the same out port on a PE. Meanwhile, since the traffic control is realized on the service layer, the manageability is improved when compared with the existing technology where the traffic control is performed on the physical layer.

## Claims

1. A method for implementing resource control on an access layer for a Virtual Circuit, VC, in a Layer 2 Virtual Private Network, L2VPN, comprising:
negotiating a bandwidth parameter for the VC through a Label Distribution Protocol, LDP, message between Provider Edges, PEs, during an establishment of a Virtual Circuit, VC, session;
obtaining a valid bandwidth parameter; and
controlling, by a Provider Edge, PE, traffic of the VC according to the valid bandwidth parameter.

2. The method of claim 1, the negotiating the bandwidth parameter for the VC through the LDP message between PEs comprises:
interacting, by the PEs, through an LDP label mapping message from a local end and an LDP label mapping message from an opposite end; and,
performing the negotiation in accordance with a bandwidth parameter carried in an extended field of the LDP label mapping message from the opposite end and a bandwidth parameter configured at the local end.

3. The method of claim 2, wherein the performing the negotiation in accordance with the bandwidth parameter carried in the extended field of the LDP label mapping message from the opposite end and the bandwidth parameter configured at the local end comprises:
comparing, by the PE, the analyzed bandwidth parameter of the opposite end with the bandwidth parameter configured for the VC at the local end; and
if they are consisitent, making the bandwidth parameter valid;
if they are not consistent, selecting the bandwidth with a smaller value and making the bandwidth with the smaller value valid, or returning a negotiation failure message.

4. The method of claim 2, wherein the extended field carrying the bandwidth parameter in the LDP mapping message is comprised in a field of Interface Parameters in a VC Forwarding Equivalence Class, FEC, element.

5. The method of claim 1, wherein the controlling, by the PE, traffic of the VC according to the valid bandwidth parameter comprises:
establishing a VC table and a traffic control table when the VC status is available.

6. The method of claim 5, wherein the VC table comprises VC index, outer label, inner label, out interface and traffic control index.

7. The method of claim 5, wherein the traffic control table comprises traffic control index and traffic control parameter, and wherein the traffic control parameter is the valid bandwidth parameter.

8. The method of claim 7, wherein the traffic control parameter comprises committed data rate, committed burst size, maximum burst size and/ or peak rate.

9. The method of claim 5, wherein a low-layer forwarding module in the PE controls traffic of the VC by querying the VC table and the traffic control table after the low-layer forwarding module establishes the VC table and the traffic control table.

10. A device for implementing resource control on an access layer for a Virtual Circuit, VC, in a Layer 2 Virtual Private Network, L2VPN, comprising:
a parameter negotiating module, adapted to negotiate a bandwidth parameter of a VC through a Label Distribution Protocol, LDP, message and obtain a valid bandwidth parameter during an establishment of a VC session; and
a low-layer forwarding module, adapted to control traffic of the VC according to the valid bandwidth parameter obtained by the parameter negotiating module.

11. The device of claim 10, wherein the parameter negotiating module comprises:
a message transmitting module, adapted to transmit an LDP label mapping message carrying a bandwidth parameter from a local end; and
a message processing module, adapted to receive an LDP label mapping message from an opposite end, perform the negotiation in accordance with a bandwidth parameter carried in an extended field of the LDP label mapping message with a bandwidth parameter configured at the local end.

12. The device of claim 11, wherein the message processing module comprises:
an analyzing module, adapted to ananlyze the bandwidth parameter carried in the LDP label mapping message from the opposite end;
a comparing module, adapted to compare the bandwidth parameter analyzed by the analyzing module with that configured for the VC at the local end;
a validating module, adapted to validate the bandwidth parameter when the comparison result is consistent; and
a selecting module, adapted to select the bandwidth parameter with a smaller value when the comparison result is inconsistent.

13. The device of claim 11, the message processing module comprises:
an analyzing module, adapted to analyze the bandwidth parameter carried in the LDP label mapping message from the opposite end;
a comparing module, adapted to compare the bandwidth parameter analyzed by the analyzing module with that configured for the VC at the local end;
a validating module, adapted to validate the bandwidth parameter when the comparison result is consistent; and
a failure message returning module, adapted to return a negotiation failure message when the comparison result is inconsistent.

14. The device of any one of claims 11 to 13, wherein the low-layer forwarding module comprises:
a table item establishing module, adapted to establish a VC table and a traffic control table according to the valid bandwidth parameter negotiated by the parameter negotiating module when the VC status is available; and
a traffic controlling module, adapted to control traffic of the VC by querying the VC table and the traffic control table.
